Europäisches Patentamt

European Patent Office

Office européen des brevets

(11) Veröffentlichungsnummer: **0 395 190**
**A1**

(12) # EUROPÄISCHE PATENTANMELDUNG

(21) Anmeldenummer: **90250086.7**

(22) Anmeldetag: **30.03.90**

(51) Int. Cl.$^5$: **G01N 23/12**

(30) Priorität: **14.04.89 DD 327619**

(43) Veröffentlichungstag der Anmeldung:
**31.10.90 Patentblatt 90/44**

(84) Benannte Vertragsstaaten:
**DE ES GR**

(71) Anmelder: **ORGREB-INSTITUT FÜR KRAFTWERKE**

**DD-7544 Vetschau(DD)**

(72) Erfinder: **Krone, Christian, Dr.-Ing.**
**Schmellwitzer Str. 62**
**DDR-7500 Cottbus(DD)**
Erfinder: **Jentsch, Gerhard, Dipl.-Ing.**

**R.-Wagner-Strasse 54**
**DDR-7543 Lübbenau(DD)**
Erfinder: **Schingnitz, Dietmar, Dipl.-Ing.**
**W.-Zierenberg-Str.48**
**DDR-7500 Cottbus(DD)**
Erfinder: **Rischowy, Bernd**
**Gesch.-Scholl-Str.19**
**DDR-7543 Lübbenau(DD)**
Erfinder: **Woye, Evelyn**
**Otto-Grotewohl-Str.47**
**DDR-7500 Cottbus(DD)**

(74) Vertreter: **Pfenning, Meinig & Partner**
**Kurfürstendamm 170**
**D-1000 Berlin 15(DE)**

(54) **Verfahren und Anordnung zur Messung des Aschegehaltes und des Mengendurchsatzes von Rohbraunkohle auf einem Förderband.**

(57) Die Anmeldung betrifft ein Verfahren und eine Anordnung zur Messung des Aschegehaltes und Mengendurchsatzes von Rohbraunkohle auf einem Förderband. Um selbst bei einer mittigen Schichthöhenüberschreitung die Messung nicht zu unterbrechen, wird die Meßwerterfassung bei Überschreitung der oberen Grenzwerte der Elementarkennwerte MSK 60 $\cdot$ (RHO $\cdot$ H) = 6,5 und MSK 660 $\cdot$ (RHO $\cdot$ H) = 2,5 von einem Meßkanal im mittigen Teil des Förderbandes auf einen Meßkanal im außermittigen Teil des Förderbandes und bei Unterschreitung der unteren Grenzwerte der Elementarkennwerte MSK 60 $\cdot$ (RHO $\cdot$ H) = 0,4 und MSK 660 $\cdot$ (RHO $\cdot$ H) = 0,25 von einem Meßkanal im außermittigen Teil des Förderbandes auf einen Meßkanal im mittigen Teil des Förderbandes umgeschaltet.

**Verfahren und Anordnung zur Messung des Aschegehaltes und des Mengendurchsatzes von Rohbraunkohle auf einem Förderband**

Die Erfindung betrifft ein Verfahren und eine Anordnung zur Messung des Aschegehaltes und des Mengendurchsatzes von Rohbraunkohle auf einem Förderband auf der Basis der Absorption harter und weicher Gammastrahlung im mittigen und außermittigen Teil des Förderbandes.

Es ist bereits bekannt, einen Meßkanal mit harter und weicher Gammastrahlung in der Mitte des Förderbandes fest anzuordnen. Der Nachteil dieser Meßmethode besteht darin, daß die Aschegehalts- und Mengendurchsatzmessung bei einer Schütthöhenüberschreitung infolge zu geringer Impulsraten zu einer fehlerhaften Aschemessung führt bzw. gestört ist. Des weiteren ist es bekannt, mehrere Meßkanäle mit harter Gammastrahlung im waagerechten und schrägen Teil des Förderbandes anzuordnen und den Füllfaktor des Förderbandes aus der Approximation der Schüttgutoberfläche zu berechnen. Diese Methode versagt, wenn einige Meßkanäle im waagerechten Teil infolge zu großer Schütthöhe oder im schrägen Teil infolge zu niedriger Schütthöhe gestört sind. Um diese Erscheinung zu vermeiden, ist bereits vorgeschlagen worden, vor dem Meßort durch eine spezielle Einrichtung die Schüttgutoberfläche des Kohlestromes in eine für die Messung günstige Form zu bringen. Damit erhöht sich wesentlich der Anlagenaufwand für die Meßtechnik.

Ziel der Erfindung ist es, den Aufwand für die Messung des Aschegehaltes und Mengendurchsatzes von Rohbraunkohle auf einem Förderband zu senken.

Der Erfindung liegt die Aufgabe zugrunde, die Aschegehalts- und Mengendurchsatzmessung von Rohbraunkohle auf einem Förderband auf der Basis der Absorption harter und weicher Gammastrahlung selbst bei einer mittigen Schichthöhenüberschreitung nicht zu unterbrechen.

Erfindungsgemäß wird dies dadurch erreicht, daß die Meßwerterfassung bei Überschreitung der oberen Grenzwerte der Elementarkennwerte MSK $60 \cdot (RHO \cdot H) = 6,5$ und MSK $660 \cdot (RHO \cdot H) = 2,5$ von einem Meßkanal im mittigen Teil des Förderbandes auf einen Meßkanal im außermittigen Teil des Förderbandes und bei Unterschreitung der unteren Grenzwerte der Elementarkennwerte MSK $60 \cdot (RHO \cdot H) = 0,4$ und MSK $660 \cdot (RHO \cdot H) = 0,25$ von einem Meßkanal im außermittigen Teil des Förderbandes auf einen Meßkanal im mittigen Teil des Förderbandes umgeschaltet wird. Bei Überschreitung der oberen Grenzwerte im außermittigen Teil des Förderbandes und bei Unterschreitung der unteren Grenzwerte im mittigen Teil des Förderbandes wird die Meßwerterfassung unterbrochen.

Aus der Unterschreitung der oberen Grenzwerte im mittigen Teil und der Überschreitung der unteren Grenzwert im außermittigen Teil wird der Füllfaktor der Förderbandmulde bestimmt.

Der Elementarkennwert MSK 60 für die Aschemessung wird wahlweise aus dem mittigen oder außermittigen Teil und der Elementarkennwert RHO $\cdot$ H für die Mengenmessung additiv aus dem Umschaltpunkt im mittigen Teil des Förderbandes, dem Elementarmeßwert RHO $\cdot$ H im außermittigen Teil des Förderbandes und dem Formfaktor bestimmt.

Die Anordnung zur Messung des Aschegehaltes und Mengendurchsatzes ist dadurch gekennzeichnet, daß unter dem Obertrum des Förderbandes im mittigen Teil ein Strahler und im außermittigen Teil ein Strahler mit harter und weicher Gammastrahlung angeordnet sind, den Strahlern über dem Förderband jeweils ein Detektor fest zugeordnet ist und die Detektoren über einen Adapter mit einem Mikrorechner verbunden sind.

Die Erfindung soll nachstehend an einem Ausführungsbeispiel näher erläutert werden. Die zugehörige Zeichnung zeigt die Anordnung zur Messung des Aschegehaltes und Mengendurchsatzes von Rohbraunkohle auf einem Förderband.

Zwischen dem Obertrum 1 und dem Untertrum 2 eines Förderbandes sind im mittigen Teil ein Strahler 4.1 und im außermittigen Teil ein Strahler 4.2 mit harter und weicher Gammastrahlung angeordnet. Den Strahlern 4.1; 4.2 ist über dem Förderband jeweils ein Detektor 5.1; 5.2 fest zugeordnet. Die zweikanaligen selektiven Detektoren 5.1; 5.2 sind über eine Kabelverbindung 6 und einen Adapter 7 mit einem Mikrorechner 8 gekoppelt. Die unteren und oberen Grenzwerte der Elementarkennwerte MSK $60 \cdot (RHO \cdot H)$ und MSK $660 \cdot (RHO \cdot H)$ für die Umschaltung der Meßkanäle 3 sind im Mikrorechner 8 gespeichert und werden ständig durch einen Soll-Istwertvergleich kontrolliert. Bei einer Überschreitung der oberen Grenzwerte im mittigen Teil des Förderbandes wird auf den Meßkanal 3.2 im außermittigen Teil des Förderbandes umgeschaltet und dort die Asche- und Mengenmessung fortgesetzt.

Bei einer Unterschreitung der unteren Grenzwerte im außermittigen Teil wird von dem Meßkanal 3.2 im außermittigen Teil auf den Meßkanal 3.1 im mittigen Teil des Förderbandes umgeschaltet. Aus der Unterschreitung der oberen Grenzwerte im mittigen Teil des Förderbandes und der Überschreitung der unteren Grenzwerte im außermittigen Teil des Förderbandes wird der Füllfaktor der Förderbandmuldung bestimmt.

Durch die erfindungsgemäße Lösung kann die Aschegehalts- und Mengendurchsatzmenge selbst bei einer mittigen Schichthöhenüberschreitung auf dem Förderband mit exakten Meßergebnissen weitergeführt werden.

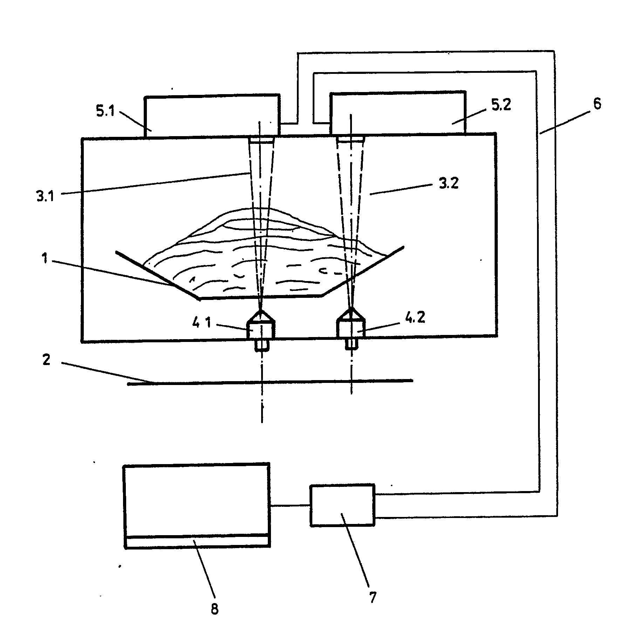

**Ansprüche**

1. Verfahren zur Messung des Aschegehaltes und des Mengendurchsatzes von Rohbraunkohle auf einem Förderband auf der Basis der Absorption harter und weicher Gammastrahlung im mittigen und außermittigen Teil des Förderbandes, **dadurch gekennzeichnet,** daß die Meßwerterfassung bei Überschreitung der oberen Grenzwerte der Elementarkennwerte MSK 60 $\cdot$ (RHO $\cdot$ H) = 6,5 und MSK 660 $\cdot$ (RHO $\cdot$ H) = 2,5 von einem Meßkanal im mittigen Teil des Förderbandes auf einen Meßkanal im außermittigen Teil des Förderbandes und bei Unterschreitung der unteren Grenzwerte der Elementarkennwerte MSK 60 $\cdot$ (RHO $\cdot$ H) = 0,4 und MSK 660 $\cdot$ (RHO $\cdot$ H) = 0,25 von einem Meßkanal im außermittigen Teil des Förderbandes auf einen Meßkanal im mittigen Teil des Förderbandes umgeschaltet wird.

2. Verfahren nach Anspruch 1, dadurch gekennzeichnet, daß bei Überschreitung der oberen Grenzwerte im außermittigen Teil des Förderbandes und bei Unterschreitung der unteren Grenzwerte im mittigen Teil des Förderbandes die Meßwerterfassung unterbrochen wird.

3. Verfahren nach Anspruch 1 und 2, dadurch gekennzeichnet, daß aus der Unterschreitung der oberen Grenzwerte im mittigen Teil und der Überschreitung der unteren Grenzwerte im außermittigen Teil der Füllfaktor der Förderbandmuldung bestimmt wird.

4. Verfahren nach Anspruch 1 bis 3, dadurch gekennzeichnet, daß der Elementarkennwert MSK 60 für die Aschemessung wahlweise aus dem mittigen oder außermittigen Teil und der Elementarkennwert RHO $\cdot$ H für die Mengenmessung additiv aus dem Umschaltpunkt im mittigen Teil des Förderbandes, dem Elementarmeßwert RHO $\cdot$ H im außermittigen Teil des Förderbandes und dem Formfaktor bestimmt wird.

5. Anordnung zur Messung des Aschegehaltes und des Mengendurchsatzes von Rohbraunkohle auf einem Förderband auf der Basis der Absorption harter und weicher Gammastrahlung im mittigen und außermittigen Teil des Förderbandes, **dadurch gekennzeichnet,** daß unter dem Obertrum (1) des Förderbandes im mittigen Teil ein Strahler (4.1) und im außermittigen Teil ein Strahler (4.2) mit harter und weicher Gammastrahlung angeordnet sind, den Strahlern (4.1;

4.2) über dem Förderband jeweils ein Detektor (5.1; 5.2) fest zugeordnet ist und die Detektoren (5.1; 5.2) über einen Adapter (7) mit einem Mikrorechner (8) verbunden sind.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | DE-A-3 735 749 (ORGREB-INSTITUT FUER KRAFTWERKE) * Spalte 4, Zeile 36 - Spalte 5, Zeile 49; Figur * | 5 | G 01 N 23/12 |
| A | | 1 | |
| | --- | | |
| A | INTERNATIONAL JOURNAL OF APPLIED RADIATION AND ISOTOPES Band 34, Nr. 1, Januar 1983, Seiten 63-69, Oxford, GB; R.A. FOOKES et al.: "On-line Determination ofthe Ash Content of Coal Using a "Siroash" Gauge Based on the Transmission of Low and High Energy gamma-Rays" * Seite 64, Absatz 2.2 * | 1,5 | |
| | --- | | |
| A | DD-A- 265 696 (ORGREB-INSTITUT FUER KRAFTWERKE) * Zusammenfassung * | 1,5 | |
| | --- | | **RECHERCHIERTE SACHGEBIETE (Int. Cl.5)** |
| A | DD-A- 220 130 (AKADEMIE DER WISSENSCHAFTEN DER DDR) * Figure * | 1,5 | G 01 N |
| | --- | | |
| A,P | DD-A- 270 978 (ORGREB-INSTITUT FUER KRAFTWERKE) * Zusammenfassung; Figur * | 1,5 | |
| | --- | | |
| A | DD-A- 227 524 (ORGREB-INSTITUT FUER KRAFTWERKE) * ganzes Dokument * | 1,5 | |

Der vorliegende Recherchenbericht wurde für alle Patentansprüche erstellt

| Recherchenort | Abschlußdatum der Recherche | Prüfer |
|---|---|---|
| BERLIN | 01-08-1990 | BRISON O.P. |